# EUROPÄISCHE PATENTANMELDUNG

(11) **EP 1 643 270 A2**
(43) Veröffentlichungstag der Anmeldung: **05.04.2006**
(21) Anmeldenummer: 05107512.5
(22) Anmeldetag: 16.08.2005
(51) Int. Cl.: G01S 13/93

(54) **Fahrerassistenzsystem**

(30) Priorität: 30.09.2004 DE 102004047485
(71) Anmelder: ROBERT BOSCH GMBH, 70442 Stuttgart (DE)
(72) Erfinder: Danz, Christian, 70469, Stuttgart (DE)

(57) **Zusammenfassung**

Die Erfindung betrifft ein Fahrerassistenzsystem mit einer Mehrzahl von Sensorsignale aussendenden und reflektierte Sensorsignale empfangenden Sensoren. Die Sensoren verfügen über Detektionsbereiche (23.1,23.2,23.3,23.4,23.5,23.6,24.1,24.2,24.3,24.4,24.5,24.6) unterschiedlicher Reichweite. Weiterhin betrifft die Erfindung ein Verfahren für die Steuerung des Fahrerassistenzsystems.

## Beschreibung

### Stand der Technik

Die Erfindung betrifft ein Fahrerassistenzsystem nach dem Oberbegriff des Anspruchs 5. Weiterhin betrifft die Erfindung ein Verfahren für die Steuerung eines Fahrerassistenzsystems nach dem Oberbegriff des Anspruchs 1. Die ständig zunehmende Verkehrsdichte und die verstärkte Bebauung freier Flächen engen den Verkehrsraum, insbesondere in Ballungszentren, immer weiter ein. Dies hat zur Folge, dass auf der vorhandenen Verkehrsfläche ein immer geringer werdendes Angebot an Parkflächen für den ruhenden Verkehr zur Verfügung steht. Die Suche nach einer freien Parklücke belastet den Fahrer zusätzlich. Der Suchverkehr belastet die Anwohner und führt zu einem gesteigerten Treibstoffverbrauch. Es werden daher Fahrerassistenzsysteme mit Einparkhilfe entwickelt. Diese Einparkhilfe umfasst eine Funktion zur Vermessung von Parklücken und weitere Unterstützungsfunktionen, die bei Auffinden einer hinreichend großen Parklücke ein zügiges Einparken des Fahrzeugs erleichtern und dadurch den Fahrer entlasten.

### Vorteile der Erfindung

Das Fahrerassistenzsystem mit den Merkmalen des Anspruchs 5 und das Verfahren für die Steuerung eines Fahrerassistenzsystems mit den Merkmalen des Anspruchs 1 ermöglichen vorteilhaft zunächst eine zügige Vermessung einer Parklücke und unterstützen daher den Fahrer schon bei dem Auffinden einer genügend großen Abstellfläche. Nach dem erfolgreichen Auffinden einer hinreichend großen Parklücke berechnet das Fahrerassistenzsystem, in Abhängigkeit von der Länge der aufgefundenen Parklücke eine optimierte Einfahrbahn und vermeidet dadurch lange und/oder erfolglose Einparkvorgänge. Mit einem geeigneten Mensch-Maschine-Interface wird dem Fahrer dabei mit optischen und/oder akustischen Mitteln eine Information darüber vermittelt, wie er zu lenken, Gas zu geben oder zu bremsen hat, um das Einparkmanöver schnell und erfolgreich zu beenden. Eventuelle Abweichungen von der von dem Fahrerassistenzsystem ermittelten optimalen Solltrajektorie werden dabei von dem Fahrer selbst oder auch automatisch ausgeglichen. Vorzugsweise wird die Längsbewegung des Fahrzeugs von dem Fahrer selbst bestimmt. Alternativ kann auch das Lenken des Fahrzeugs automatisch erfolgen, wobei der Fahrer nur noch das Gasgeber und/oder Bremsen übernimmt.
Die Erfindung zeichnet sich dabei durch eine gesteigerte Genauigkeit bei der Erfassung der Begrenzungen der Parklücke aus. Weiterhin ermöglicht sie eine gesteigerte Genauigkeit bei der Erfassung der Breite oder Tiefe einer Parklücke und bei der Erfassung einer den Parkstreifen begrenzenden Berandung, wie insbesondere einer Bordsteinkante. Infolge der genaueren Erfassung der Begrenzungen der Parklücke, sowie deren Breite bzw. Tiefe und eventueller Berandung kann noch eine genauer ermittelte Solltrajektorie bereitgestellt werden. Diese wiederum ist die Grundlage für ein zügiges und erfolgreiches manuelle gesteuertes oder automatisch durchgefiihrtes Einparken.
Die Erfindung geht dabei von der Erkenntnis aus, dass die bei bekannten Fahrerassistenzsystemen übliche Erfassung und Auswertung des hinsichtlich seines Abstands zu dem Sensor nächstgelegenen Ziels nicht regelmäßig zu einem voll befriedigenden Ergebnis führt. Abhängig von dem wechselnden Beladungszustand des Fahrzeugs und/oder der Beschaffenheit der Oberflächenstruktur der Fahrbahn bzw. des Parkstreifens ist nämlich nicht mit Sicherheit auszuschließen, dass das als nächstliegend erfasste Ziel die erwartete Begrenzung der Parklücke und/oder die seitliche Berandung des Parkstreifens ist. Vielmehr kommt es häufig vor, dass Bodenreflexionen auftreten, die dann fälschlich als Ziel interpretiert werden, wenn - wie bisher üblich - nur das nächstliegende Ziel als relevant angenommen wird. Bei starkem Bodenclutter ist es zudem in der Regel nicht mehr möglich, die seitliche Berandung eines Parkstreifens, insbesondere einen Bordstein, zuverlässig zu erkennen. Aufgrund dieser unzuverlässigen Daten kann dann keine optimale Solltrajektorie ermittelt werden. Dies hat wiederum zur Folge, dass ein Einparkvorgang nicht zuverlässig genug durchgefiihrt werden kann. Während ein wechselnder Belastungszustand des Fahrzeugs unter Umständen noch mittels geeigneter Sensoren erfasst und mit Korrekturfaktoren berücksichtigt werden könnte, ist der Zustand der Fahrbahnoberfläche in dem Bereich einer angefahrenen Parklücke nicht ohne weiteres vorhersehbar. Beispielsweise können bereits einzelne Splitteilchen, angehäufte Splitteilchen oder unebene Belagsplatten zu einer Verstärkung der Bodenreflexionen (Clutter) führen. Die Erfindung löst dieses Problem auf elegante Weise dadurch, dass zum Zwecke der Parklückenvermessung (PLV) und des halbautonomen Einparkens (SPA = Semiautonomous Parking Assistant) nicht nur der Abstand des nächstgelegenen Ziels berücksichtigt wird. Vielinehr werden auch noch die Abstände mehrerer weiter entfernter Ziele erfasst und bei der Erkennung der Begrenzung der Parklücke und ggf. deren seitlicher Berandung berücksichtigt. Besonders vorteilhaft werden die Abstände von zwei bis zehn Zielen, insbesondere von fünf Zielen berücksichtigt. Besonders vorteilhaft werden Trackingfilter für die Auswertung der an Objekten reflektierten Signale eingesetzt.

### Zeichnung

Ausführungsbeispiele der Erfindung werden nachfolgend unter Bezug auf die Zeichnung erläutert. Dabei zeigt
- Figur 1: eine Aufsicht auf eine Verkehrsfläche,
- Figur 2: eine Aufsicht auf ein Fahrzeug,
- Figur 3: eine Aufsicht auf ein Fahrzeug mit eingezeichneten Detektionsbereichen von Sensoren,
- Figur 4: die schematische Darstellung eines Fahrzeugs auf einer Verkehrsfläche,
- Figur 5: ein Abstand/Wegstrecken-Diagramm ohne Bodenclutter,
- Figur 6: ein Abstand/Wegstrecken-Diagramm mit Bodenclutter,
- Figur 7: ein Abstand/Wegstrecken-Diagramm mit Bodenclutter vor Filterung,
- Figur 8: ein Abstand/Wegstrecken-Diagramm mit Bodenclutter nach Filterung,
- Figur 9: ein Diagramm mit Darstellung der Amplitude des Signals als Funktion des Abstands,
- Figur 10: ein Diagramm mit Darstellung von durch ein Trackingfilter verknüpften Signalen.

### Beschreibung der Ausführungsbeispiele

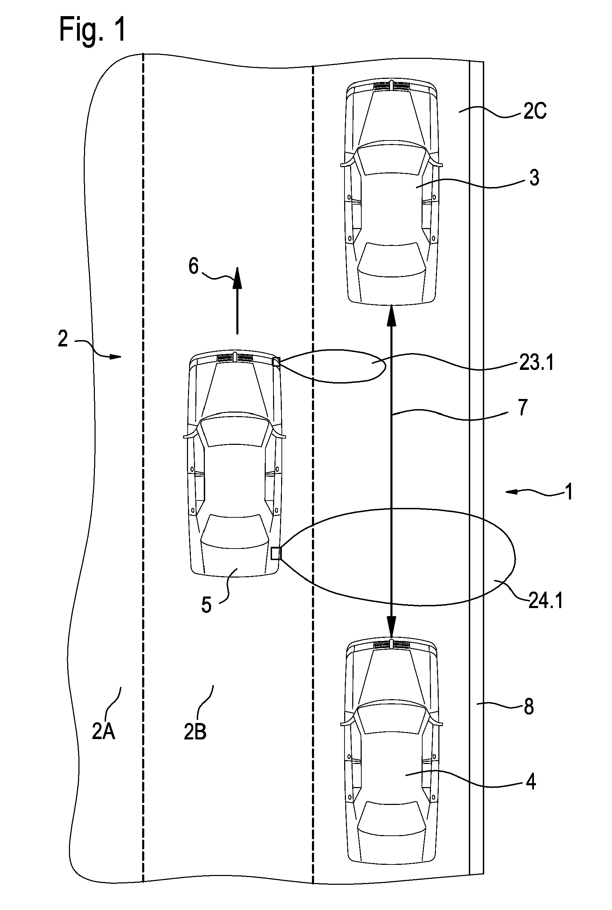

Figur 1 zeigt eine Aufsicht auf eine Verkehrsfläche 1. Die Verkehrsfläche 1 umfasst eine Fahrbahn 2 mit 2 Fahrspuren 2A, 2B, sowie einen Parkstreifen 2C. Auf dem Parkstreifen 2C sind zwei Fahrzeuge 3 und 4 mit Abstand voneinander geparkt. Die zwischen diesen Fahrzeugen 3,4 befmdliche Parklücke ist durch einen Doppelpfeil 7 gekennzeichnet. Auf der Fahrspur 2B bewegt sich ein weiteres Fahrzeug 5 in Richtung des Pfeils 6. Dieses Fahrzeug 5 ist auf der Suche nach einer Parkmöglichkeit. Das Fahrzeug 5 ist mit einem Fahrerassistenzsystem, insbesondere einer Einparkhilfe ausgerüstet. Diese Einparkhilfe umfasst eine Mehrzahl von Sensoren, die über einen bestimmten Detektionsbereich verfügen. In Figur 1 sind je ein Detektionsbereich 5A, 5B eines im Frontbereich und im Heckbereich des Fahrzeugs 5 angeordneten Sensors dargestellt. Aus der Darstellung in Figur 1 geht hervor, dass der Detektionsbereich 5A kleiner ist als der Detektionsbereich 5B und sich somit weniger weit in Richtung des Parkstreifens 2C erstreckt. Der Detektionsbereich 5B erstreckt sich über die gesamte Breite des Parkstreifens 2C und erfasst auch noch den Bordstein 8, der den Parkstreifen 2C nach rechts begrenzt. Unter Detektionsbereich ist derjenige Bereich zu verstehen, aus dem der Sensor nach Aussendung eines Sendesignals noch ein sicher erkennbares reflektiertes Signal aufnehmen kann.

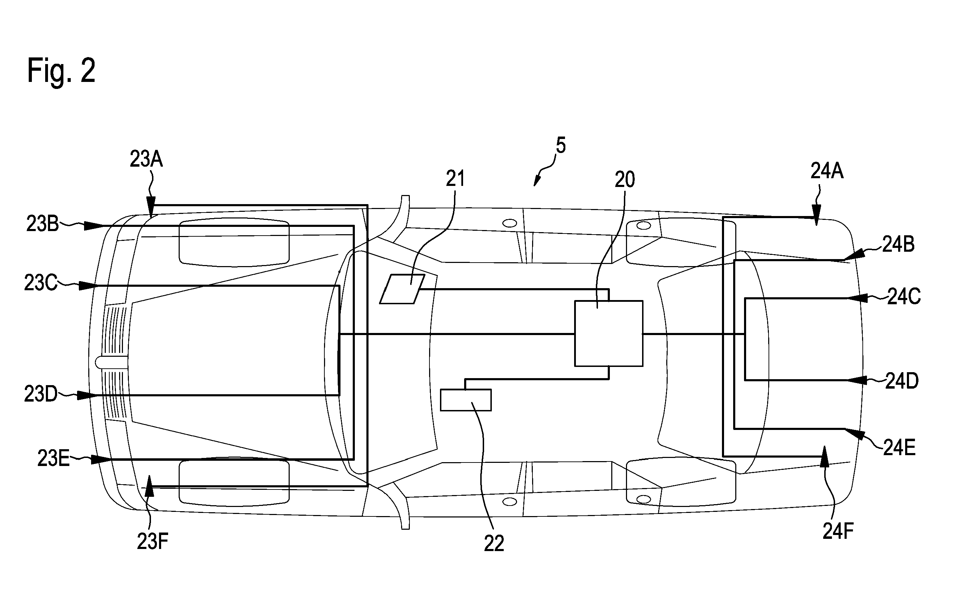

Figur 2 zeigt eine Aufsicht auf das mit einem Fahrerassistenzsystem ausgerüstete Fahrzeug 5. Das Fahrerassistenzsystem umfasst wenigstens ein Steuergerät 20. Mit dem Steuergerät 20 ist ein Display 21 verbunden, das vorzugsweise in dem Sichtbereich des Fahrers angeordnet ist. Weiterhin ist mit dem Steuergerät 20 ein Funktionsmodul 22 verbunden. Dieses Funktionsmodul 22 bildet eine Schnittstelle zu einem in dem Fahrzeug 5 angeordneten Bussystem, insbesondere einem CAN-BUS-System. Über dieses Funktionsmodul 22 erhält das Fahrerassistenzsystem Informationen wie Lenkwinkel, Wegesignale und ähnliche, die auf dem Bussystem des Fahrzeugs 5 bereitgestellt werden. Schließlich sind mit dem Steuergerät 20 eine Mehrzahl von Sensoren 23A,23B,23C,23D,23E,23F,24A,24B,24C,24D,24E,24F verbunden. Dabei lassen sich zwei Gruppen von Sensoren unterscheiden. Die Sensoren 23A bis 23F sind in dem Frontbereich des Fahrzeugs 5 und die Sensoren 24A bis 24F in dem Heckbereich des Fahrzeugs 5 angeordnet. Vorzugsweise handelt es sich bei den Sensoren um Ultraschallsensoren, die in einem Sendebetrieb Schallsignale im Ultraschallbereich aussenden und die in einem Empfangsbetrieb an Hindernissen reflektierte Ultraschallsignale empfangen. Vorstellbar sind weitere Ausführungsvarianten, bei denen Sensoren eingesetzt werden, die nach anderen physikalischen Prinzipien arbeiten. Beispielsweise optische Sensoren, die optische Signale aussenden und reflektierte optische Signale empfangen oder Radarsensoren, die Radarsignale aussenden und reflektierte Radarsignale empfangen. In einer weiteren Ausführungsvariante der Erfindung ist auch eine gemischte Bestückung vorstellbar. Dabei ist das Fahrzeug 5 mit unterschiedlichen Sensortypen ausgestattet, also beispielsweise mit Sensoren, die mit Ultraschallsignalen, mit optischen Signalen und mit Radarsignalen arbeiten.

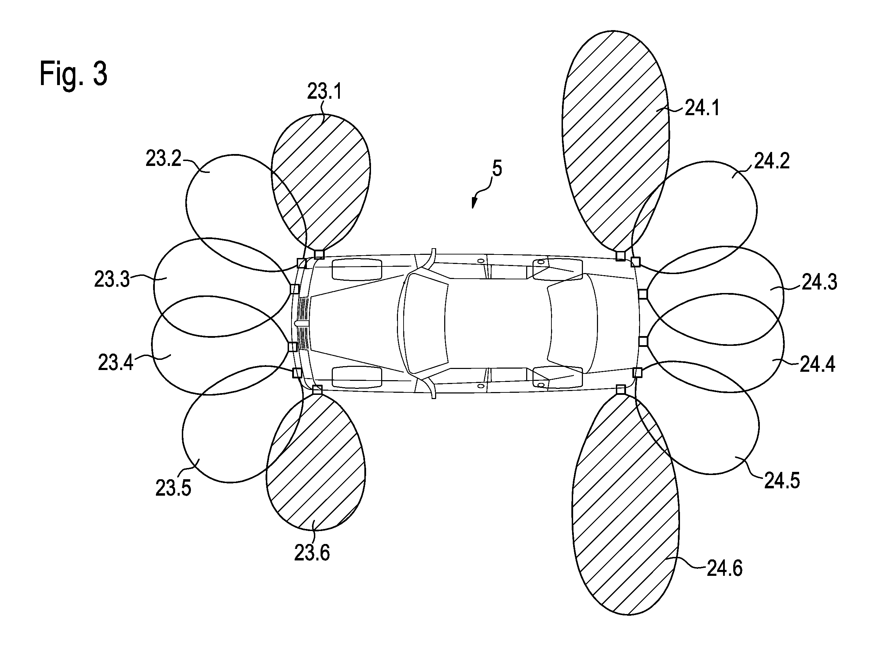

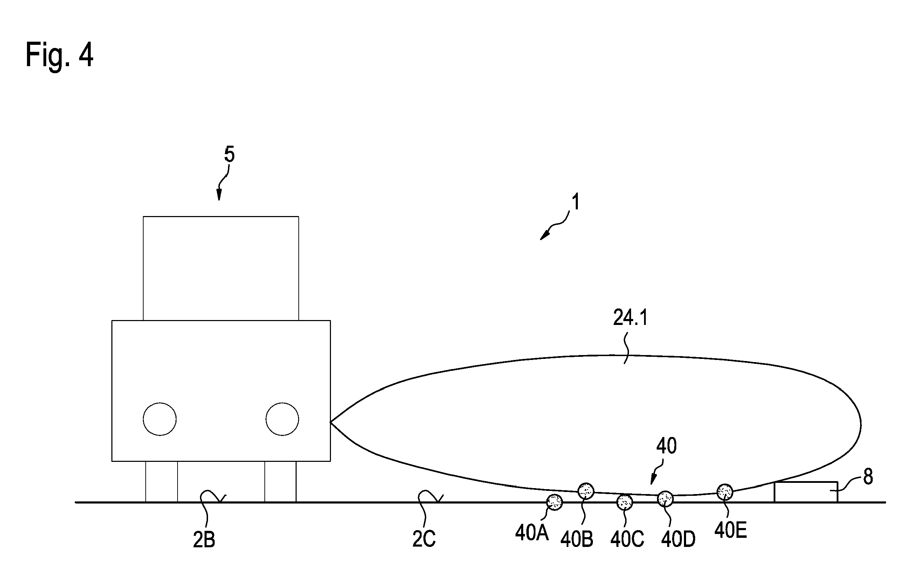

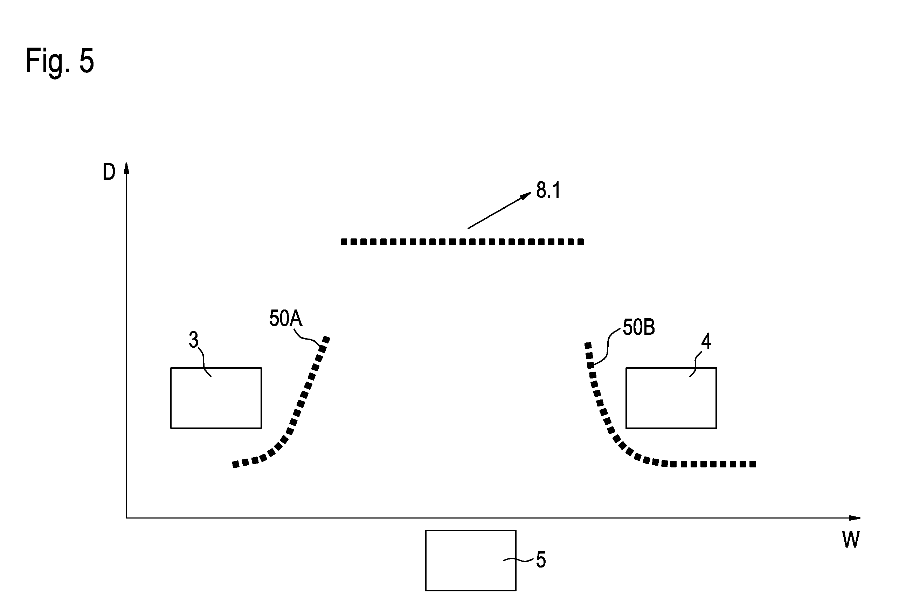

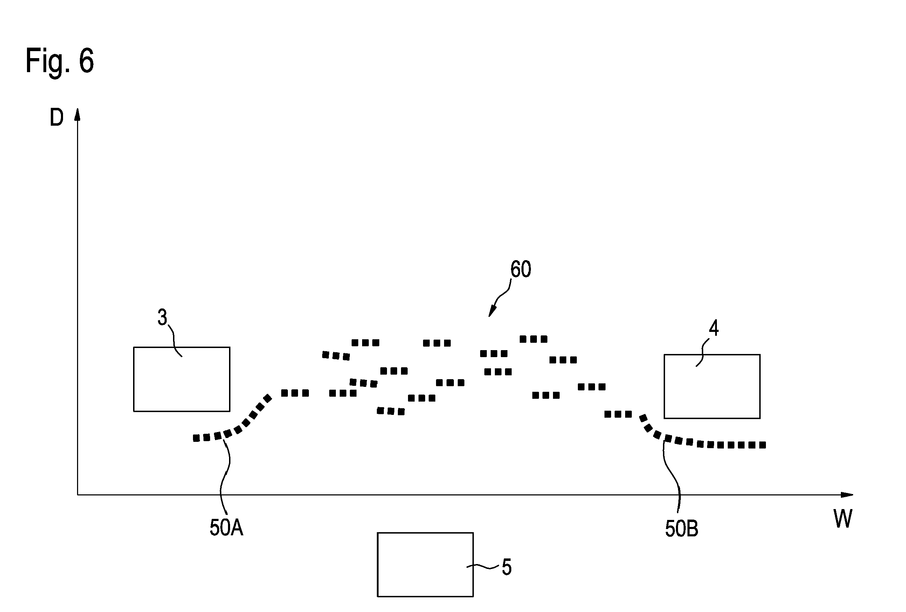

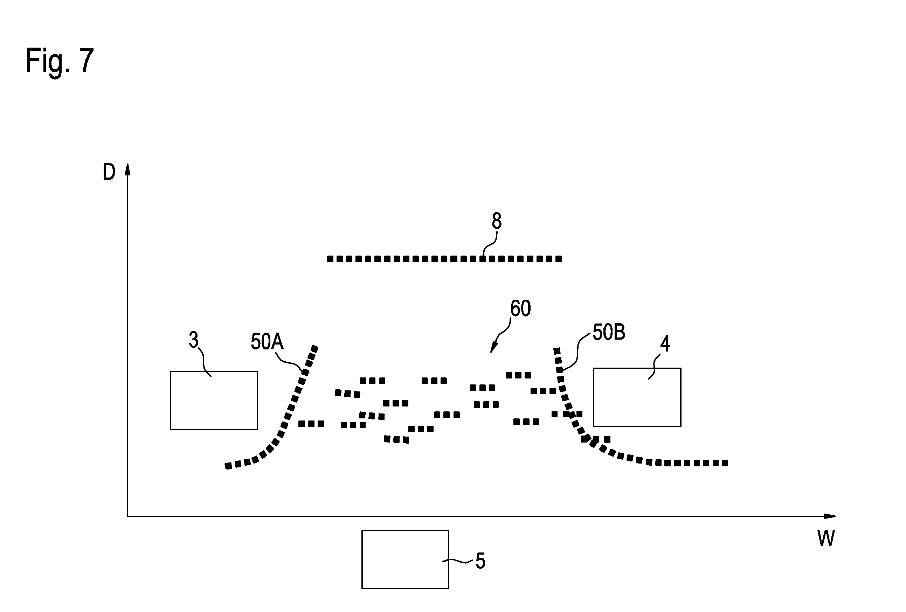

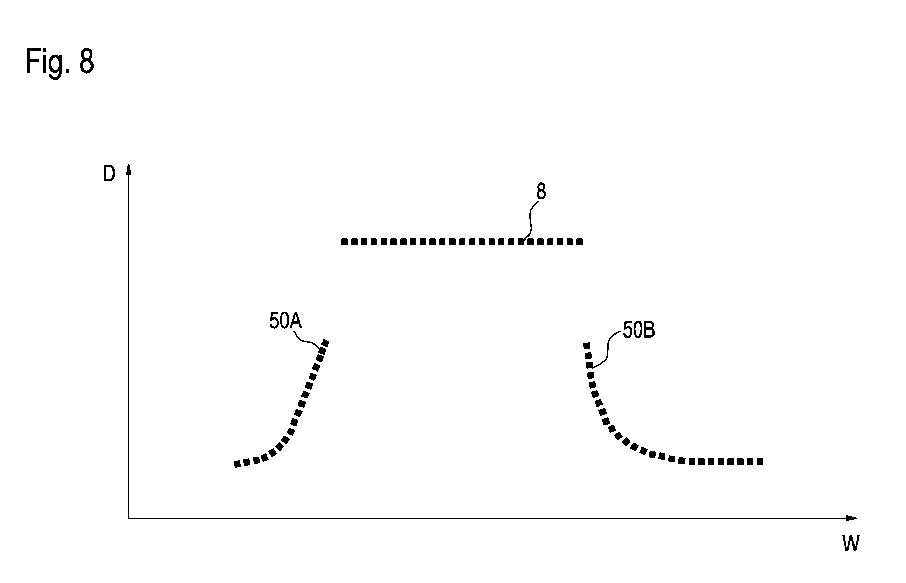

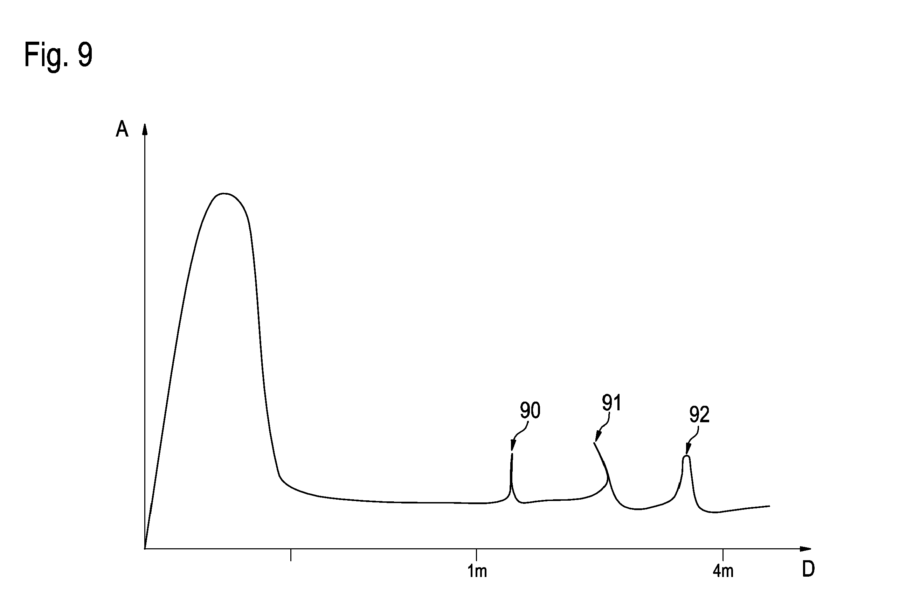

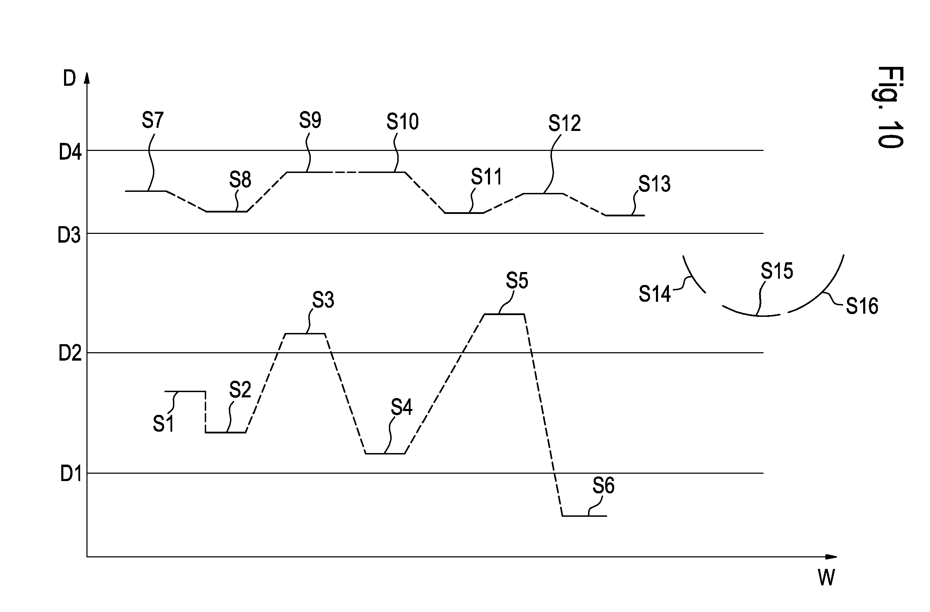

Figur 3 zeigt ebenfalls eine Aufsicht auf das Fahrzeug 5. In dieser Darstellung sind jedoch zusätzlich die Detektionsbereiche 23.1,23.2,23.3,23.4,23.5,23.6 und 24.1,24.2,24.3,24.4,24.5,24.6 der Sensoren eingezeichnet. Die den in dem Frontbereich des Fahrzeugs 5 angeordneten Sensoren 23A und 23 F zugeordneten Detektionsbereiche 23.1 und 23.6 sind in Figur 3 schraffiert gezeichnet. Diese Detektionsbereiche dienen bevorzugt zur Vermessung ggf. aufgefundener Parklücken. Die Reichweite der Sensoren 23A, 23F kann daher vorzugsweise so bemessen werden, dass bei einer Vorbeifahrt des Fahrzeugs 5 an parkenden Fahrzeugen 3,4 (Figur 1) Front und Heck der geparkten Fahrzeuge 3,4 sicher erkannt werden können. Die Erfassung weiter entfernt liegender Ziele ist dagegen nicht erforderlich und nicht erwünscht. Die den in dem Heckbereich des Fahrzeugs 5 angeordneten Sensoren 24A und 24F zugeordneten Detektionsbereiche 24.1 und 24.6 sind in Figur 3 ebenfalls schraffiert gezeichnet. Diese Detektionsbereiche dienen bevorzugt zur Erkennung und Vermessung der Breite bzw. Tiefe des Parkstreifens 2C bzw. zur Vermessung der Berandung des Parkstreifens 2C, insbesondere der Erkennung von Bordsteinen 8. Zu diesem Zweck wird die Reichweite der Sensoren 24A, 24F derart gewählt, dass sie die Breite bzw. Tiefe üblicher Parkstreifen zuverlässig überstreicht. Zu diesem Zweck ist die Reichweite der Sensoren 24A, 24F größer zu wählen als die Reichweite der Sensoren 23A,23F. Vorzugsweise beträgt die Reichweite der Sensoren 24A, 24F zwischen 3m und 6m, insbesondere 4m.
Die erfindungsgemäße Lösung wird nun anhand von Figur 4 weiter beschrieben. Figur 4 zeigt die schematische Darstellung eines Fahrzeugs 5 auf einer Verkehrsfläche 1. Das Fahrzeug 5 ist auf der Suche nach einem Parkplatz. Es befmdet sich noch auf der Fahrspur 2B der Fahrbahn 2 und schickt sich gerade an, mittels eines eine Einparkhilfe umfassenden Fahrerassistenzsystems in eine auf dem Parkstreifen 2C befindliche Parklücke einzuparken. Figur 5 zeigt dazu ein dieser Situation entsprechendes Abstand/Weg-Diagramm, wie es beispielsweise auf einem in dem Sichtfeld des Fahrers angeordneten Display 21 (Figur 2) dargestellt wird. Auf der x-Achse ist dabei eine Wegstrecke W entlang der Längsachse des Fahrzeugs 5 im Bereich des Fahrzeugs 5 aufgetragen. Auf der y-Achse ist der Abstand D von den Sensoren 23A,24A quer zu der Längsachse des Fahrzeugs 5 aufgetragen. Mit Bezugsziffern 50A, 50B sind die Begrenzungen einer Parklücke bezeichnet. Diese Begrenzungen werden von dort parkenden Fahrzeugen 3,4 gebildet, die eine freie Parklücke zwischen sich einschließen. In einem noch größeren Abstand ist auf dem Display eine einen Bordstein 8 anzeigende Markierung 8.1 erkennbar. Die in Figur 5 gezeigte Darstellung auf einem Display wurde durch Auswertung lediglich des Echos des den Sensoren 23A, 23F nächstgelegenen Ziels gewonnen, jedoch unter idealen Bedingungen, das heißt, im Wesentlichen ohne nennenswerte Störungen durch Bodenechos. Als nächstgelegenes Ziel wird dann tatsächlich der Bordstein 8 erkannt. Derart ideale Bedingungen kommen in der Praxis jedoch relativ selten vor. Vielmehr muss häufig mit Störungen durch Bodenreflexionen gerechnet werden. Ursache für derartige Störungen sind beispielsweise auf der Fahrbahn liegende Körper oder Fahrbahnunebenheiten, die die Sensorsignale ebenfalls reflektieren und die das von einem Ziel reflektierte Sensorsignal überlagern und daher in nachteiliger Weise als Störquellen wirken. Eine derartige Situation wird durch Figur 4 verdeutlicht, in der ein auf dem Parkstreifen 2C liegendes Störziel 40 eingezeichnet ist. Das Störziel 40 besteht hier aus einer Anzahl kleinerer Störziele 40A, 40B,40C,40D,40E. Hierbei kann es sich beispielsweise um auf dem Parkstreifen 2C liegende Körner von Streusplit handeln. Ein dieser Situation entsprechendes Bild auf dem Display 21 ist in Figur 6 dargestellt. Dieses Bild repräsentiert wiederum ein Abstand/Weg-Diagramm, ähnlich wie Figur 5. Auf der x-Achse ist eine Wegstrecke W entlang der Längsachse des eine Parklücke suchenden Fahrzeugs 5 dargestellt. Auf der y-Achse ist der Abstand D von den Sensoren 23A, 23F, 24A, 24F dargestellt. Auf dem Display erkennbar sind die von den bereits geparkten Fahrzeugen 3,4 bestimmten Begrenzungen 50A,50B der noch freien Parklücke. In dem Bereich der freien Parklücke liegend sind entlang der Wegstrecke W zahlreiche Echosignale 60 mit unterschiedlichen Abständen D von den Sensoren erkennbar. Diese Echosignale 60 entsprechen im Wesentlichen den von den Störzielen 40, 40A,40B,40C,40D,40E verursachten Bodenechos. Durch diese Bodenechos sind die beispielsweise von einem in dem Bereich der Parklücke liegenden Bordstein erwarteten Nutzsignale derart gestört, dass die Darstellung auf dem Display keine Hilfe für die Erkennung des Bordsteins mehr bieten kann. Ein den Parksteifen 2C ggf. begrenzender Bordstein 8 ist nämlich überhaupt nicht mehr zu erkennen. Die Begrenzungen 50A,50B der Parklücke sind ebenfalls nicht mehr deutlich sichtbar. Unter diesen widrigen Bedingungen kann ein Fahrerassistenzsystem auch keine zuverlässige Solltrajektorie für einen automatisch oder halbautomatisch ablaufenden Einparkvorgang mehr generieren. Wie im Folgenden unter Bezug auf Figur 7, Figur 8 und Figur 9 erläutert wird, kann jedoch die Erfmdung hier erfolgreich Abhilfe schaffen. Dies gelingt dadurch, dass nicht nur das nächstliegende Ziel berücksichtigt wird. Vielmehr werden, abgesehen von dem nächstliegenden Ziel, noch eine Anzahl n weiterer Ziele berücksichtigt. In der Praxis hat sich herausgestellt, dass bei der Berücksichtigung von 1+n Zielen, mit n = 1 bis 10, vorzugsweise n = 1 bis 4, wesentlich bessere Ergebnisse zu erzielen sind, als bei Berücksichtigung nur des einen, nächstgelegenen Ziels. Besonders zweckmäßig wird n = 4 gewählt, sodass insgesamt 5 Ziele berücksichtigt werden. Dies ist ein sehr guter Kompromiss zwischen Aufwand und Ergebnis. Je mehr Ziele berücksichtigt werden sollen, desto größer muss nämlich die Rechenleistung des die Signale auswertenden Steuergeräts sein. Figur 7 zeigt wiederum ein Abstands/Wegstrecken-Diagramm, in dem von Zielen reflektierte Signale entlang der Wegstrecke W dargestellt sind. Eine derartige Darstellung ergibt sich beispielsweise auf dem Display 21 bei Auftreten von Bodenreflexionen und bei der Berücksichtigung von insgesamt 5 nächstgelegenen Zielen noch ohne Filterung. Im Hintergrund, das heißt in dem größten Abstand D, ist bereits eine linienartige Struktur zu erkennen, die vermutlich auf die Reflexionen des Signals an einem Bordstein 8 zurückzuführen ist. Bei Berücksichtigung nur des nächstgelegenen Signals, aus dem Bereich der Echosignale 60, wäre diese Struktur nicht mehr zu erkennen gewesen. Auch die von bereits geparkten Fahrzeugen 3,4 herrührenden Begrenzungen 50A,50B der Parklücke sind bereits erkennbar, obgleich sie immer noch durch Echosignale 60 gestört sind. Im Bereich der Parklücke sind mit unterschiedlichen Abständen D zahlreiche Echosignale 60 erkennbar, die auf Bodenreflexionen zurückzuführen sind, während die Begrenzungen 50A, 50B der Parklücke immer noch stark durch Bodenreflexionen gestört und daher nicht deutlich erkennbar sind. Um nun ein von Störungen durch Bodenreflexionen möglichst unbeeinflusstes Signalbild zu erhalten, wird zweckmäßig eine Filterung der reflektierten Signale vorgenommen. Geeignete Filter sind vorzugsweise Median- oder Trackingfilter. Im Folgenden wird beispielhaft die Anwendung eines Trackingfilters erläutert. Das Ergebnis nach einer abschließenden Filterung ist in Figur 8 dargestellt. Auch Figur 8 zeigt wiederum die Darstellung auf dem Display 21, wobei wiederum ein Abstands/Wegstrecken-Diagramm dargestellt ist. Das heißt, dass auf der x-Achse des Diagramms eine Wegstrecke W entlang der Längsachse des einen Parkplatz suchenden Fahrzeugs 5 und auf der y-Achse des Diagramms der Abstand D der die Signale reflektierenden Ziele dargestellt sind. Störende Bodenreflexionen (Echosignale 60 in Figur 6 und Figur 7) sind nunmehr völlig eliminiert. Im Hintergrund ist eine einen Bordstein 8 repräsentierende linienartige Struktur deutlich zu erkennen. Im Vordergrund sind die Begrenzungen der Parklücke 50A,50B ebenfalls deutlich sichtbar. Mit Hilfe eines derart klaren Signalbilds kann ein halbautomatisch oder vollautomatisch ablaufender Einparkvorgang mit großer Zuverlässigkeit durchgeführt werden. Dieses klare Signalbild erleichtert dem Fahrer selbstverständlich auch einen Einparkvorgang, wenn er diesen manuell durchführen möchte. Mittels des zur Anwendung gelangenden Trackingfilters wird, wie oben schon erwähnt, eine vorgebbare Anzahl von Sensorsignalen ausgewertet oder miteinander verknüpft. Die Auswertung beschränkt sich also nicht, wie bisher üblich, auf die Verwendung des nächstgelegenen reflektierten Sensorsignals. Dies wird im Folgenden anhand von Figur 9 verdeutlicht. Figur 9 zeigt ein Diagramm mit Darstellung der Amplitude A des reflektierten Sensorsignals als Funktion des Abstands D. Auf der x-Achse des Diagramms ist der Abstand D in der Einheit m aufgetragen. Auf der y-Achse des Diagramms ist die Amplitude A des gesendeten und reflektierten Sensorsignals in beliebigen Einheiten aufgetragen. In dem Abstandsintervall zwischen etwa 1m und 4m sind mehrere Spitzenwerte 90,91,92 des reflektierten Sensorsignals erkennbar. Auf herkömmliche Art und Weise würde nur das nächstgelegene Ziel berücksichtigt, auf das der Spitzenwert 90 des reflektierten Signals zurückzuführen ist. Erfindungsgemäß werden bei der Auswertung jedoch auch noch die von weiter entfernten Zielen stammenden Spitzenwerte 91, 92 und ggf. weitere, berücksichtigt. Die Verknüpfung der reflektierten Sensorsignale mittels eines Trackingfilters wird im Folgenden nun weiter unter Bezug auf Figur 10 erläutert. In dem in Figur 10 dargestellten Diagramm ist auf der x-Achse wiederum eine Wegstrecke W entlang der Längsachse des einen Parkplatz suchenden Fahrzeugs 5 dargestellt. Auf der y-Achse des Diagramms ist der Abstand D von den Sensoren 23A, 23F, 24A, 24F aufgetragen. In unterschiedlichen Abständen D und bei unterschiedlichen Werten W erfasste reflektierte Sensorsignale sind mit S 1 bis S 16 bezeichnet. Hierbei handelt es nur um eine beispielhafte Darstellung. Bei in der Praxis einsetzbaren Systemen wird eine größere Anzahl von reflektierten Signalen ausgewertet. Vorzugsweise können etwa 30 bis 50 Signale erfasst und mittels eines Trackingfilters ausgewertet werden. Für die Auswertung in dem Trackingfilter können vorteilhaft Grenz-oder Schwellwerte für den Abstand D vorgegeben werden. Insbesondere können Abstandsintervalle, wie beispielsweise D1-D2 und D3-D4 festgelegt werden. Signale Sn, die innerhalb eines derartigen Intervalls liegen, können dann als zu einer einheitlichen Struktur gehörend interpretiert werden. Dies trifft beispielsweise für die aus dem Abstandsintervall D3-D4 erfassten Signale S7 bis S13 zu. Das Tracking dieser Signale, die mittels der gestrichelt dargestellten Hilfslinien verbunden sind, deutet auf eine lang gestreckte Struktur mit einem im Wesentlichen übereinstimmenden Abstandswert D3-D4 von den Sensoren 24A,24F hin. Diese Struktur entspricht mit großer Wahrscheinlichkeit einem in dieser Entfernung befmdlichen Bordstein. Die in einem geringeren Abstand, nämlich in dem Abstandsintervall D1-D2 erfassten Signale S1 bis S6, ergeben bei dem Tracking eine unregelmäßigere Struktur und fallen zum Teil (Signale S3, S5, S6) aus dem Abstandsintervall D1-D2 heraus. Bei dieser Signalstruktur kann auf störende Bodenreflexionen geschlossen werden, die in der Darstellung auf dem Display oder bei der Steuerung des Fahrzeugs zu unterdrücken sind. In besonders vorteilhafter Weiterbildung der Erfindung können die mittels Tracking gewonnenen Kurvenzüge auch mit vorgebbaren Strukturen verglichen werden, die in einem Speichermittel eines Steuergeräts des Fahrerassistenzsystems gespeichert sind. Auf diese Weise lässt sich die linienartige Signalsignatur eines Bordsteins leicht erkennen. Besonders vorteilhaft lassen sich dadurch auch die Strukturen von Pfosten oder Säulen von Verkehrszeichen erkennen, die häufig auch in Parkzonen aufgestellt sind und Hindernisse für ein einparkendes Fahrzeug darstellen können. Die eine bogenförmige Struktur darstellenden Signale S 14, S15 und S16 können beispielsweise ein ein Verkehrszeichen tragendes Rohr repräsentieren. In weiteren Ausführungsvarianten der Erfmdung können besonders vorteilhaft auch noch Grenzwerte, insbesondere Intervalle für die Wegstrecke W im Zusammenhang mit dem Tracking vorgegeben werden. Werden reflektierte Signale Sn aus einem ähnlichen Abstand über eine längere Wegstrecke W empfangen, dann deutet dies wiederum auf eine lang gestreckte Struktur, wie beispielsweise einen Bordstein, hin. Haben die reflektierte Signale Sn erzeugenden Körper eine vergleichsweise geringe Ausdehnung entlang der x-Achse, dann deutet dies eher auf durch Störkörper verursachte Bodenreflexionen hin. In einer weiteren Ausführungsvariante können auch noch die Intensitätswerte bzw. Amplituden aus vergleichbarer Entfernung erfasster reflektierter Signale Sn berücksichtigt werden. Ähnliche Amplituden deuten dann wiederum auf eine zusammenhängende Struktur wie einen Bordstein hin.

## Patentansprüche

1. Verfahren für die Steuerung eines den Abstand zu Objekten messende Sensoren (23A,23B,23C,23D,23E,23F,24A,24B,24C,24D,24F,24F) umfassenden Fahrerassistenzsystems, bei dem von den Sensoren (23A,23B,23C,23D,23E,23F,24A,24B,24C,24D,24F,24F) Signale ausgesandt und an Objekten reflektierte Signale (S1,S2,...Sn) empfangen und ausgewertet werden, **dadurch gekennzeichnet, dass** die reflektierten Signale (S1,S2,...Sn) auf das Vorliegen von Störsignalen, wie insbesondere Bodenechos, überwacht werden und dass bei dem Auftreten von Störsignalen die reflektierten Sensorsignale (S1,S2,...Sn) von 1+n Objekten ausgewertet werden, insbesondere mit 1 < n < 10.

2. Verfahren nach Anspruch 1, **dadurch gekennzeichnet, dass** die reflektierten Signale (S1, S2,... Sn) gefiltert werden.

3. Verfahren nach einem der vorhergehenden Ansprüche, **dadurch gekennzeichnet, dass** die reflektierten Signale (S1, S2,...Sn) mit einem Trackingfilter gefiltert werden.

4. Verfahren nach einem der vorhergehenden Ansprüche, **dadurch gekennzeichnet, dass** die gefilterten Signale mit vorgebbaren Signalverläufen verglichen werden.

5. Fahrerassistenzsystem mit einer Mehrzahl von Sensorsignale aussendenden und reflektierte Sensorsignale (S1,S2,...Sn) empfangenden Sensoren (23A,23B,23C,23D,23E,23F,24A,24B,24C,24D,24F,24F), **dadurch gekennzeichnet, dass** die Sensoren (23A,23B,23C,23D,23E,23F,24A,24B,24C,24D,24F,24F) Detektionsbereiche (23.1,23.2,23.3,23.4,23.5,23.6,24.1,24.2,24.3,24.4,24.5,24.6) unterschiedlicher Reichweite umfassen.

6. Fahrerassistenzsystem nach einem der vorhergehenden Ansprüche, **dadurch gekennzeichnet, dass** wenigstens je ein Sensor (23A,23B,23C,23D,23E,23F,24A,24B,24C,24D,24F,24F) für die Erfassung einer Parklücke und für die Erfassung von Strukturen, wie insbesondere eines Bordsteins innerhalb einer erfassten Parklücke vorgesehen ist.

7. Fahrerassistenzsystem nach einem der vorhergehenden Ansprüche, **dadurch gekennzeichnet, dass** der wenigstens eine Sensor (23A,23B,23C,23D,23E,23F,24A,24B,24C,24D,24F,24F) für die Erfassung einer Parklücke in dem Frontbereich des Fahrzeugs (5) und der wenigstens eine Sensor (23A,23B,23C,23D,23E,23F,24A,24B,24C,24D,24F,24F) für die Erfassung von Strukturen innerhalb einer erfassten Parklücke in dem Heckbereich des Fahrzeugs (5) angeordnet ist.

8. Fahrerassistenzsystem nach einem der vorhergehenden Ansprüche, **dadurch gekennzeichnet, dass** der Detektionsbereich (23.1,23.2,23.3,23.4,23.5,23.6,24.1,24.2,24.3,24.4,24.5,24.6) des für die Erfassung einer Parklücke vorgesehenen Sensors (23A,23B,23C,23D,23E,23F,24A,24B,24C,24D,24F,24F) eine Reichweite zwischen 1m und 3m, insbesondere 2,5m aufweist.

9. Fahrerassistenzsystem nach einem der vorhergehenden Ansprüche, **dadurch gekennzeichnet, dass** die Reichweite des Detektionsbereichs (23.1,23.2,23.3,23.4,23.5,23.6,24.1,24.2,24.3,24.4,24.5,24.6) des für die Erfassung von Strukturen innerhalb der Parklücke vorgesehenen Sensors (23A,23B,23C,23D,23E,23F,24A,24B,24C,24D,24F,24F) die Reichweite des Detektionsbereichs (23.1,23.2,23.3,23.4,23.5,23.6,24.1,24.2,24.3,24.4,24.5,24.6)des Sensors (23A,23B,23C,23D,23E,23F,24A,24B,24C,24D,24F,24F) übertrifft.

10. Fahrerassistenzsystem nach einem der vorhergehenden Ansprüche, **dadurch gekennzeichnet, dass** die Reichweite des Detektionsbereichs (23.1,23.2,23.3,23.4,23.5,23.6,24.1,24.2,24.3,24.4,24.5,24.6) des Sensors(23A,23B,23C,23D,23E,23F,24A,24B,24C,24D,24F,24F) zwischen 3m und 5m, insbesondere zwischen 3,5m und 4m liegt.

11. Fahrerassistenzsystem nach einem der vorhergehenden Ansprüche, **dadurch gekennzeichnet, dass** das Fahrerassistenzsystem Mittel für die Erkennung von Hindernissen in einem Parkbereich, wie insbesondere Verkehrszeichen, umfasst.

12. Fahrerassistenzsystem nach einem der vorhergehenden Ansprüche, **dadurch gekennzeichnet, dass** es Filtermittel, wie insbesondere Trackingfilter umfasst.
